# EUROPÄISCHE PATENTSCHRIFT

(11) **EP 3 689 537 B1**
(45) Veröffentlichungstag und Bekanntmachung des Hinweises auf die Patenterteilung: **07.08.2024**
(21) Anmeldenummer: 19155068.0
(22) Anmeldetag: 01.02.2019
(51) Int. Cl.: B23Q 3/155, B23Q 17/09, B26D 5/00, B26D 7/26, B26D 7/27, B26F 1/38

(54) **SCHNEIDMASCHINE MIT WERKZEUGWECHSELFUNKTION**
CUTTING MACHINE WITH TOOL CHANGING FUNCTION
MACHINE À DÉCOUPER AVEC CHANGEMENT D'OUTIL

(43) Veröffentlichungstag der Anmeldung: 05.08.2020
(73) Patentinhaber: ZÜND SYSTEMTECHNIK AG, 9450 Altstätten (CH)
(72) Erfinder: Rempfler, Leo, CH-9050 Appenzell (CH); Göldi, Markus, CH-9450 Lüchingen (CH); Steiger, Fabian, CH-9450 Altstätten (CH); Jann, Simon, CH-9450 Altstätten (CH)
(74) Vertreter: Kaminski Harmann

(56) Entgegenhaltungen:
- EP-A2- 0 155 662
- EP-A2- 0 230 642
- WO-A1-2011/045729
- WO-A1-2015/010704
- CN-U- 206 326 367
- DE-A1- 102013 106 427
- DE-U1- 20 309 394
- JP-A- 2003 071 672
- US-A- 4 497 029
- US-A1- 2002 144 579
- US-A1- 2010 171 276
- US-B1- 6 585 628

## Beschreibung

Die Erfindung betrifft eine Schneidemaschine mit auswechselbaren Werkzeugen zum Schneiden von Objekten. Diese Objekte können insbesondere bedruckte oder unbedruckte Bögen aus Papier, Karton oder ähnlichen Materialien, Schaumstoffe, Kunststofffolien, Tücher, Fasergewebe, Leder oder ähnliches darstellen. Erfindungsgemäss ist die Schneidemaschine dazu ausgestaltet, individuelle Schneidwerkzeuge zu identifizieren. In einer Ausführungsform ist die Schneidemaschine dazu ausgestaltet, Betriebsdaten der Schneidwerkzeuge, insbesondere Einsatzzeiten, zu überwachen, beispielsweise um Wartungsintervalle für jedes der identifizierten Schneidwerkzeuge festzulegen.

Gattungsgemässe Maschinen sind beispielsweise in den Dokumenten EP 1 385 674 B1 und EP 2 488 333 B1 beschrieben. Eine solche Schneidemaschine weist eine Arbeitsfläche auf, die zur Aufnahme mindestens eines Objekts ausgestaltet ist, eine beweglich über der Arbeitsfläche angeordnete Arbeitsgruppe mit einem Messer oder einer anderen Schneidevorrichtung zum Schneiden von auf der Arbeitsfläche befindlichen Objekten. Unter "Schneiden" ist dabei nicht unbedingt ein vollständiges Durchtrennen zu verstehen, sodass ein "Schneideauftrag" ebenso ein Perforieren, Falzen, Rillen oder Markieren des Objekts oder einen ähnlichen Arbeitsschritt beinhalten kann, der mit einer gattungsgemässen Maschine ausführbar ist.

Es ist eine Aufgabe der Erfindung, eine verbesserte Schneidemaschine mit auswechselbaren Schneidwerkzeugen bereitzustellen.

Eine weitere Aufgabe ist es, eine solche Schneidemaschine bereitzustellen, die eine automatische Auswahlfunktion zum Einsatz oder Austausch eines individuellen Schneidwerkzeugs aufweist, oder bei welcher die Schneidwerkzeuge vollautomatisch auswechselbar sind.

Eine weitere Aufgabe ist es, eine solche Schneidemaschine bereitzustellen, die eine automatische Betriebsüberwachung ("Monitoring") einer Vielzahl individueller Schneidwerkzeuge ermöglicht. Insbesondere ist es eine Aufgabe, eine solche Schneidemaschine bereitzustellen, mittels welcher Wartungsintervalle für individuelle Schneidwerkzeuge automatisch festgelegt oder verwaltet werden.

Mindestens eine dieser Aufgaben wird durch die Verwirklichung der Merkmale von Anspruch 1 gelöst. Vorteilhafte Ausgestaltungen der Erfindung finden sich dabei in den jeweils abhängigen Ansprüchen.

Die vorliegende Erfindung betrifft eine Schneidemaschine mit einer Arbeitsfläche, die zur Aufnahme mindestens eines zu schneidenden Objekts ausgestaltet ist, einer Arbeitsgruppe, die beweglich über der Arbeitsfläche angeordnet ist und eine Aufnahmevorrichtung zur Aufnahme eines auswechselbaren Schneidwerkzeugs aufweist, welches das erste Schneidwerkzeug eine Messerhalterung zur Aufnahme eines Halteabschnitts eines Schneidemaschinenmessers aufweist, und einer Recheneinheit, aufweisend einen Prozessor mit Rechenkapazität und Algorithmen zur Steuerung der Schneidemaschine und Speicherkapazität zum Bereitstellen einer Datenbank. Die Recheneinheit kann dabei integraler Bestandteil der Maschine sein, oder extern bereitgestellt sein, und beispielsweise mit mehreren Schneidemaschinen verbunden sein.

Die Erfindung betrifft eine solche erfindungsgemässe Schneidemaschine, die mindestens eine erste Sensoreinheit aufweist, die zum Erfassen individueller Identifikationsinformationen des Schneidwerkzeugs und zum Bereitstellen erfasster Identifikationsinformationen an die Recheneinheit ausgestaltet ist.

Die erfindungsgemässe Schneidemaschine weist eine Werkzeugwechseleinheit zum automatisierten Einsetzen eines Schneidwerkzeugs in die Aufnahmevorrichtung auf. Die Sensoreinheit an der Werkzeugwechseleinheit angebracht ist und dazu ausgestaltet, die Identifikationsinformationen des Schneidwerkzeugs zu erfassen, wenn das Schneidwerkzeug in der Werkzeugwechseleinheit befindlich ist oder in die Aufnahmevorrichtung eingesetzt wird.

Dabei ist die Recheneinheit dazu ausgestaltet,
- das Schneidwerkzeug basierend auf den Identifikationsinformationen zu erkennen,
- Betriebsdaten des Schneidwerkzeugs zu erfassen und in der Datenbank abzuspeichern, wobei die Betriebsdaten mindestens eine Betriebszeit des Schneidwerkzeugs umfassen,
- in der Datenbank das erste Schneidwerkzeug mit diesem Messer zu verknüpfen, und
- basierend auf den Betriebsdaten eine Betriebsüberwachung des Schneidwerkzeugs durchzuführen.

Die Betriebsüberwachung umfasst ein Überwachen von Betriebszeiten bzw. Zuständen der Vielzahl von auswechselbaren Schneidwerkzeugen oder in den Schneidwerkzeugen eingesetzten Messern. Dabei ist die Recheneinheit mindestens dazu ausgestaltet auf Basis der Betriebsüberwachung
- ein Wartungsintervall für ein Schneidwerkzeug festzulegen,
- eine Wartung für ein Schneidwerkzeug auszulösen,
- ein Auswechselintervall für Schneidwerkzeuge festzulegen, insbesondere für zwei oder mehr gleichartige Schneidwerkzeuge,
- eine Auswechslung eines Schneidwerkzeugs auszulösen, ein Auswechselintervall für Messer festzulegen, und/oder
- eine Auswechslung eines Messers auszulösen.

Gemäss einer Ausführungsform dieser Schneidemaschine ist die Recheneinheit dazu ausgestaltet,
- Identifikationsinformationen einer Vielzahl von auswechselbaren Schneidwerkzeugen in der Datenbank zu speichern,
- Betriebsdaten für jedes Schneidwerkzeug der Vielzahl von Schneidwerkzeugen zu erfassen und in der Datenbank abzuspeichern, und
- basierend auf den Betriebsdaten eine Betriebsüberwachung der Vielzahl von Schneidwerkzeugen durchzuführen.

Alternativ oder zusätzlich können die Betriebsdaten auch direkt im Schneidwerkzeug abgespeichert werden. Dazu können in den Schneidwerkzeugen RFID-Chips oder kontaktierbare Speicher verbaut sein, die ein Auslesen der abgespeicherten Betriebsdaten ermöglichen. Insbesondere kann ein Datenaustausch auch mittels Nahfeldkommunikation erfolgen.

Gemäss einer weiteren Ausführungsform weist die Schneidemaschine eine zweite Sensoreinheit auf, die zum Erfassen individueller Identifikationsinformationen eines Messers ausgestaltet ist, das in das Schneidwerkzeug einsetzbar ist, und zum Bereitstellen erfasster Identifikationsinformationen des Messers an die Recheneinheit. Dabei ist die Recheneinheit dazu ausgestaltet, dieses Messer basierend auf den Identifikationsinformationen zu erkennen, Betriebsdaten des Messers zu erfassen und in der Datenbank abzuspeichern, wobei die Betriebsdaten mindestens eine Betriebszeit des Messers umfassen, und basierend auf den Betriebsdaten eine Betriebsüberwachung des Messers durchzuführen. Insbesondere kann auch die zweite Sensoreinheit eine optische Sensoreinheit sein, die ausgestaltet ist zum Erfassen eines optisch erfassbaren Identifikationscodes auf dem Schneidwerkzeug, wie zum Beispiel eines DataMatrix-Codes, QR-Codes oder ähnlichem. Der Identifikationscode stellt die individuellen Identifikationsinformationen des Schneidwerkzeugs für die erste Sensoreinheit erfassbar bereit. Ausserdem kann die Recheneinheit dazu ausgestaltet sein, die Betriebsdaten des Messers und die Betriebsdaten des Schneidwerkzeugs in der Datenbank miteinander zu verknüpfen.

Die Werkzeugwechseleinheit kann dabei insbesondere zu einem automatisierten Auswechseln eines in der Aufnahmevorrichtung befindlichen Schneidwerkzeugs durch ein anderes Schneidwerkzeug ausgestaltet sein, das in der Werkzeugwechseleinheit bereitgestellt wird. Die Werkzeugwechseleinheit kann auch dazu ausgestaltet sein, eine Vielzahl an unterschiedlichen Schneidwerkzeugen bereitzustellen.

In einer Ausführungsform ist die Werkzeugwechseleinheit in Relation zu einem Bewegungsbereich der Arbeitsgruppe derart an der Schneidemaschine positioniert, dass die Aufnahmevorrichtung zum automatisierten Einsetzen oder Auswechseln eines Schneidwerkzeugs an der Werkzeugwechseleinheit positionierbar ist, z. B. oberhalb der Werkzeugwechseleinheit.

In einer Ausführungsform weist die Werkzeugwechseleinheit eine Vielzahl von Haltevorrichtungen zum Bereitstellen einer Vielzahl an Schneidwerkzeugen auf, wobei jede der Haltevorrichtungen mindestens eine Stütze aufweist, insbesondere drei Stützen, wobei die Stützen dazu ausgestaltet sind, eine Tragevorrichtung des bereitgestellten Schneidwerkzeugs zu kontaktieren.

In einer Ausführungsform ist die Sensoreinheit ausgestaltet, an der Tragevorrichtung des Schneidwerkzeugs bereitgestellte Identifikationsinformationen des Schneidwerkzeugs zu erfassen, wenn das Schneidwerkzeug in der Werkzeugwechseleinheit befindlich ist.

In einer weiteren Ausführungsform basiert eine automatische Auswahl eines Schneidwerkzeugs aus der Vielzahl in der Werkzeugwechseleinheit vorhandenen Schneidwerkzeuge zum Einsetzen in die Aufnahmevorrichtung auf den erfassten Identifikationsinformationen des Schneidwerkzeugs.

Gemäss einer Ausführungsform der Schneidemaschine die erste Sensoreinheit eine optische Sensoreinheit, die ausgestaltet ist zum Erfassen eines optisch erfassbaren Identifikationscodes, insbesondere eines DataMatrix-Codes, auf dem ersten Schneidwerkzeug, wobei der Identifikationscode die individuellen Identifikationsinformationen des ersten Schneidwerkzeugs für die erste Sensoreinheit erfassbar bereitstellt.

Neben optischen sind auch diverse andere prinzipiell bekannte Lösungen zur Code-Erfassung denkbar. Alternativ kann die erste Sensoreinheit beispielsweise ein RFID-Lesegerät aufweisen (RFID = radio-frequency identification), das ausgestaltet ist zum Erfassen eines in einem RFID-Transponder des Schneidwerkzeugs bereitgestellten Identifikationscodes, der die individuellen Identifikationsinformationen des ersten Schneidwerkzeugs umfasst oder bereitstellt. Ebenso kann die Sensoreinheit dazu ausgestaltet sein, den Identifikationscode, bzw. die individuellen Identifikationsinformationen, mittels Nahfeldkommunikation vom Schneidwerkzeug abzurufen. Weiterhin alternativ kann die erste Sensoreinheit zum Auslesen der Identifikationsinformationen zur mechanischen Kontaktierung des Schneidwerkzeugs ausgestaltet sein. Beispielsweise zum Herstellen eines elektrischen Kontakts mit einer Speichereinheit des Schneidwerkzeugs (z. B. über eine USB-Schnittstelle) oder zum Abtasten eines auf einer Oberfläche des Schneidwerkzeugs angebrachten erhabenen Codes, der die Identifikationsinformationen bereitstellt.

Insbesondere weist die Schneidemaschine dabei eine zweite Sensoreinheit auf, die zum Erfassen individueller Identifikationsinformationen des Messers und zum Bereitstellen erfasster Identifikationsinformationen an die Recheneinheit ausgestaltet ist. Beispielsweise ist diese zweite Sensoreinheit eine optische Sensoreinheit, die ausgestaltet ist zum Erfassen eines optisch erfassbaren Identifikationscodes auf dem Messer, wobei der Identifikationscode die individuellen Identifikationsinformationen des Messers für die zweite Sensoreinheit erfassbar bereitstellt. Weiterhin kann die Recheneinheit dazu ausgestaltet sein,
- das Messer basierend auf den Identifikationsinformationen zu erkennen,
- Betriebsdaten des Messers zu erfassen und in der Datenbank abzuspeichern, wobei die Betriebsdaten mindestens eine Betriebszeit des Messers umfassen,
- die Betriebsdaten des ersten Schneidwerkzeugs und Betriebsdaten des Messers in der Datenbank miteinander zu verknüpfen,
- basierend auf den Betriebsdaten eine Betriebsüberwachung des Messers durchzuführen, und/oder
- auch basierend auf Betriebsdaten einer Vielzahl an Messern auszuwählen, welches der in einer Werkzeugwechseleinheit der Schneidemaschine bereitgestellten Schneidwerkzeuge in die Aufnahmevorrichtung eingesetzt wird.

In einer Ausführungsform weist die Schneidemaschine eine Rüstplatz-Sensoreinheit auf, die beispielsweise als eine Flächenkamera ausgebildet ist. Diese ist ausgestaltet zum Erfassen individueller Identifikationsinformationen des ersten Schneidwerkzeugs und des Messers und zum Bereitstellen erfasster Identifikationsinformationen an die Recheneinheit. Die Recheneinheit ist dazu ausgestaltet, das erste Schneidwerkzeug und das Messer basierend auf den von der Rüstplatz-Sensoreinheit bereitgestellten Identifikationsinformationen zu erkennen.

In einer Ausführungsform ist die Rüstplatz-Sensoreinheit an einem der Schneidemaschine zugeordneten Rüstplatz, insbesondere einem Bedienpult der Schneidemaschine, derart angeordnet, dass das erste Schneidwerkzeug und das Messer durch einen Benutzer der Schneidemaschine manuell derart an die Rüstplatz-Sensoreinheit annäherbar sind, dass ein Identifikationscode des ersten Schneidwerkzeugs bzw. des Messers, der die individuellen Identifikationsinformationen für die Rüstplatz-Sensoreinheit erfassbar bereitstellt, von der Rüstplatz-Sensoreinheit erfassbar ist.

In einer Ausführungsform ist die Recheneinheit dazu ausgestaltet, in der Datenbank ein Schneidwerkzeug und ein Messer miteinander zu verknüpfen, deren individuelle Identifikationsinformationen aufeinanderfolgend durch die Rüstplatz-Sensoreinheit erfasst wurden.

In einer Ausführungsform ist die Rüstplatz-Sensoreinheit ausgestaltet zum Erfassen individueller Identifikationsinformationen weiterer Komponenten, die zum Verbinden mit dem ersten Schneidwerkzeug oder der Arbeitsgruppe ausgestaltet sind, wobei die Recheneinheit dazu ausgestaltet ist, die Komponente basierend auf den Identifikationsinformationen zu erkennen und in der Datenbank mit dem ersten Schneidwerkzeug und dem Messer zu verknüpfen. Eine solche Komponente kann beispielsweise ein Gleitschuh sein.

Gemäss einer weiteren Ausführungsform der Schneidemaschine weist die Schneidemaschine einen Klingensensor zum Erfassen einer Klingenform eines in das erste Schneidwerkzeug eingesetzten Messers auf. Der Klingensensor kann insbesondere als ein Zeilensensor ausgestaltet sein. Der Klingensensor kann dabei natürlich auch zum Erfassen der Form und Grösse eines anderen Werkzeugeinsatzes verwendbar sein, wie beispielsweise zum Ermitteln eines Fräserdurchmessers oder einer Rillradgrösse.

In einer Ausführungsform sind Informationen über eine Vielzahl an Messertypen (bzw. anderen Werkzeugeinsatztypen) in der Recheneinheit gespeichert und weisen Informationen über eine Klingen- bzw. Werkzeugform des jeweiligen Messer- oder Werkzeugeinsatztyps auf, und die Recheneinheit ist dazu ausgestaltet, anhand der von dem Klingensensor erfassten Klingen- bzw. Werkzeugform einen Messer- oder Werkzeugeinsatztyp des in das erste Schneidwerkzeug eingesetzten Messers oder anderen Werkzeugeinsatzes zu ermitteln.

Ein weiterer Aspekt der vorliegenden Erfindung, gemäss Anspruch 15, betrifft eine Verwendung eines Schneidwerkzeuges in einer erfindungsgemäßen Schneidemaschine. Dabei ist das Schneidwerkzeug auswechselbar in eine Aufnahmevorrichtung der Schneidemaschine einsetzbar ausgestaltet und weist eine Messerhalterung zur Aufnahme eines Halteabschnitts eines Schneidemaschinenmessers auf.

Gemäss diesem Aspekt der Erfindung weist das Schneidwerkzeug ein Codeelement auf, das individuelle Identifikationsdaten des Schneidwerkzeugs für eine Sensoreinheit der Schneidemaschine erfassbar bereitstellt. Diese individuellen Identifikationsdaten sind dabei dazu ausgestaltet, eine individuelle Identifizierung des Schneidwerkzeugs zu ermöglichen.

In einer Ausführungsform des Schneidwerkzeugs weist das Codeelement einen optisch erfassbaren Identifikationscode auf, z. B. in Form eines durch eine optische Sensoreinheit erfassbaren DataMatrix-Codes, wobei der Identifikationscode die individuellen Identifikationsdaten des Schneidwerkzeugs beinhaltet.

Ein Aspekt, der nicht zur vorliegenden Erfindung gehört, betrifft ein Verfahren zum Betreiben einer Schneidemaschine mit einer Vielzahl von auswechselbaren Schneidwerkzeugen, aufweisend
- ein Erfassen individueller Identifikationsinformationen eines ersten Schneidwerkzeugs mittels einer ersten Sensoreinheit der Schneidemaschine;
- ein Bereitstellen erfasster Identifikationsinformationen an eine Recheneinheit der Schneidemaschine;
- ein Erfassen der Identifikationsinformationen und Identifizieren des ersten Schneidwerkzeugs basierend auf den Identifikationsinformationen durch die Recheneinheit;
- ein Erfassen und Speichern von dem ersten Schneidwerkzeug zuordenbaren Betriebsdaten, und ein Verknüpfen der Betriebsdaten mit dem ersten Schneidwerkzeug in einer Datenbank der Recheneinheit, wobei die Betriebsdaten mindestens eine Betriebszeit des Schneidwerkzeugs umfassen; und
- eine Betriebsüberwachung des Schneidwerkzeugs basierend auf den Betriebsdaten.

Gemäss einer Ausführungsform des Verfahrens umfasst die Betriebsüberwachung ein Überwachen von Betriebszeiten bzw. Zuständen der Vielzahl von Schneidwerkzeugen und/oder in diesen eingesetzten Messern. Das Verfahren umfasst in diesem Fall, auf Basis der Betriebsüberwachung
- ein Wartungsintervall für ein Schneidwerkzeug festzulegen;
- eine Wartung für ein Schneidwerkzeug auszulösen,
- ein Auswechselintervall für Schneidwerkzeuge festzulegen, insbesondere für zwei oder mehr gleichartige Schneidwerkzeuge,
- eine Auswechslung eines Schneidwerkzeugs auszulösen,
- ein Auswechselintervall für Messer festzulegen, und/oder
- eine Auswechslung eines Messers auszulösen.

Gemäss einer weiteren Ausführungsform weist das Verfahren ein initiales Verknüpfen des ersten Schneidwerkzeugs mit einem gemeinsam mit diesem zu verwendenden Schneidemaschinenmesser auf - insbesondere an einem Rüstplatz der Schneidemaschine.

Das initiale Verknüpfen umfasst:
- ein Erfassen der individuellen Identifikationsinformationen des ersten Schneidwerkzeugs mittels einer Rüstplatz-Sensoreinheit (beispielsweise ausgestaltet als Flächensensor zur Erfassung eines DataMatrix-Codes);
- ein Erfassen individueller Identifikationsinformationen des Messers mittels der Rüstplatz-Sensoreinheit;
- ein Bereitstellen der von der Rüstplatz-Sensoreinheit erfassten Identifikationsinformationen (von Schneidwerkzeug und Messer) an die Recheneinheit;
- ein Identifizieren des ersten Schneidwerkzeugs und des Messers basierend auf den Identifikationsinformationen durch die Recheneinheit;
- ein Verknüpfen des ersten Schneidwerkzeugs und des Messers in der Datenbank der Recheneinheit; und
- ein Einsetzen des Messers in das erste Schneidwerkzeug.

Das Erfassen und das Einsetzen kann dabei jeweils manuell durch einen Benutzer, benutzerunterstützt (d. h. teilautomatisiert) oder vollautomatisiert erfolgen. Beispielsweise kann der Benutzer das Schneidwerkzeug und das Schneidemaschinenmesser nacheinander zum Erfassen des Codes an die Sensoreinheit halten und anschließend das Messer in das Schneidwerkzeug einsetzen. Das so mit dem Messer verknüpfte ("verheiratete") Schneidwerkzeug kann dann in eine Werkzeugwechseleinheit der Schneidemaschine eingesetzt werden, wobei es von einer weiteren (der "ersten") Sensoreinheit erfasst wird.

Ein Aspekt, der nicht zur vorliegenden Erfindung gehört, betrifft ein Computerprogrammprodukt mit Programmcode, der auf einem maschinenlesbaren Träger gespeichert ist, zur Ausführung des Verfahrens zum Betreiben einer Schneidemaschine, insbesondere wobei das Programm in einer Recheneinheit der Schneidemaschine des ersten oder zweiten Erfindungsaspekts ausgeführt wird.

Die erfindungsgemässe Schneidemaschine, das erfindungsgemässe Schneidwerkzeug und das Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine beispielhafte Ausführungsform einer erfindungsgemässen Schneidemaschine mit auswechselbarem Werkzeug;
- Fig. 2a: eine beispielhafte Ausführungsform eines Messers zum Einsetzen in ein Werkzeug;
- Fig. 2b: eine beispielhafte Ausführungsform eines auswechselbaren Werkzeugs mit einer Aufnahme für ein Messer;
- Fig. 3a-h: weitere beispielhafte Ausführungsformen von Messern;
- Fig. 4a-c: beispielhafte Ausführungsformen eines erfindungsgemässen auswechselbaren Werkzeugs;
- Fig. 5: einen Schnitt durch eine Arbeitsgruppe einer ersten beispielhaften Ausführungsform einer erfindungsgemässen Schneidemaschine mit einem eingesetzten auswechselbaren Werkzeug;
- Fig. 6a-b: eine Wechselbatterie der ersten beispielhaften Ausführungsform der Schneidemaschine mit mehreren auswechselbaren Werkzeugen;
- Fig. 7: eine zweite beispielhafte Ausführungsform eines erfindungsgemässen auswechselbaren Werkzeugs und eine Arbeitsgruppe einer zweiten beispielhaften Ausführungsform einer erfindungsgemässen Schneidemaschine;
- Fig. 8a-c: eine dritte beispielhafte Ausführungsform eines erfindungsgemässen auswechselbaren Werkzeugs und eine Arbeitsgruppe einer dritten beispielhaften Ausführungsform einer erfindungsgemässen Schneidemaschine;
- Fig. 9: eine vierte beispielhafte Ausführungsform eines erfindungsgemässen auswechselbaren Werkzeugs und eine Arbeitsgruppe einer vierten beispielhaften Ausführungsform einer erfindungsgemässen Schneidemaschine; und
- Fig. 10: eine beispielhafte Ausführungsform eines Verfahrens zum Betreiben einer Schneidemaschine.

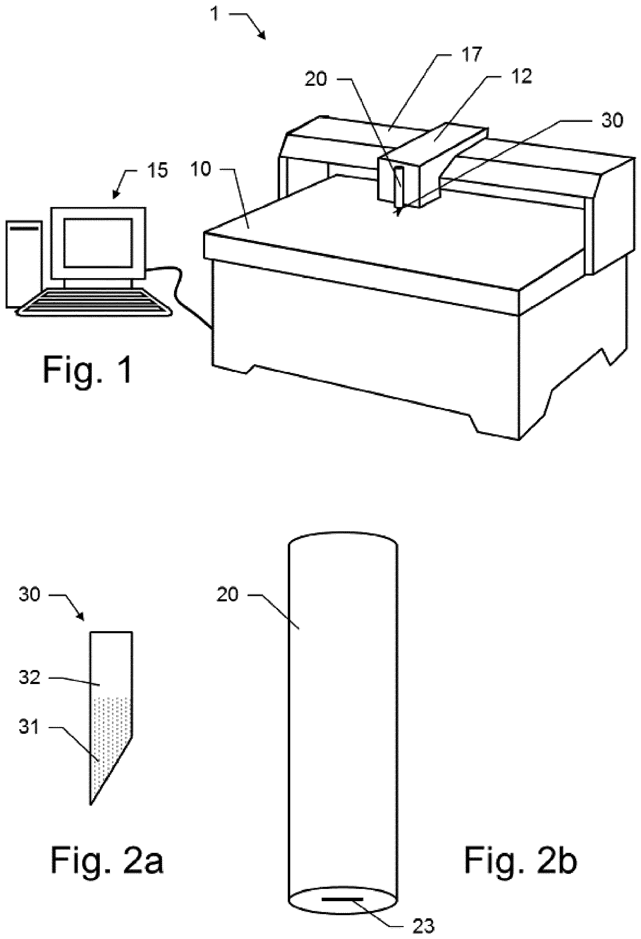

Figur 1 zeigt eine gattungsgemässe Schneidemaschine 1. Als Flachbett-Schneidemaschine weist sie einen Tisch mit einer ebenen Arbeitsfläche 10 auf, auf welcher zu schneidende Objekte platzierbar sind.

Oberhalb der Arbeitsfläche 10 ist eine Arbeitsgruppe 12 mit einem Schneidwerkzeug 20 angeordnet, welches ein Messer 30 aufweist. Die Arbeitsgruppe 12 ist relativ zur Arbeitsfläche 10 mindestens zweidimensional motorisiert verfahrbar, um jeden Punkt der Arbeitsfläche 10 anfahren zu können. Dazu ist die Arbeitsgruppe 12 in einer ersten Richtung beweglich an einem Balken 17 angebracht, der wiederum in einer zweiten Richtung beweglich an dem Tisch angebracht ist. Insbesondere kann die Schneidemaschine 1 auch ein oszillierend angetriebenes Schneidwerkzeug 20 aufweisen und so zum Schneiden mehrwandiger Verbundplatten ausgestaltet sein, wie beispielsweise in der EP 2 894 014 B1 beschrieben.

Die Schneidemaschine 1 weist ausserdem eine Recheneinheit 15 auf. Diese kann wie hier dargestellt als ein externer Computer, der eine Datenverbindung mit der Maschine 1 aufweist, ausgestaltet sein oder als interne Steuereinheit in die Maschine 1 selbst integriert sein. Die Recheneinheit 15 umfasst einen Prozessor mit Rechenkapazität und Algorithmen zur Steuerung der Schneidemaschine 1 entsprechend einem bereitgestellten Schneideauftrag. Die Recheneinheit 15 ist zur Steuerung des Schneidwerkzeugs 20 und ggf. einer Kamera ausgestaltet, insbesondere zum Verfahren der Arbeitsgruppe 12 relativ zur Arbeitsfläche 10. Die Recheneinheit 15 weist zudem einen Datenspeicher zum Speichern der Schneideaufträge und ggf. weiterer Daten auf. Die Schneidemaschine kann ein zusätzliches Bedienpult aufweisen, in welches die Recheneinheit 15 oder Teile davon integriert sind.

Die Figuren 2a und 2b zeigen ein auswechselbares Messer 30 und ein auswechselbares Schneidwerkzeug 20 einer gattungsgemässen Schneidemaschine, wie sie aus dem Stand der Technik prinzipiell bekannt sind. Das Messer 30 weist einen Schneidebereich mit Klinge 31 und einen Haltebereich 32 zum Einführen in eine Aufnahme 23 des Schneidwerkzeugs 20 auf. Das Schneidwerkzeug 20 ist zur Verwendung in einer Schneidemaschine wie der beispielhaft in Figur 1 gezeigten ausgebildet.

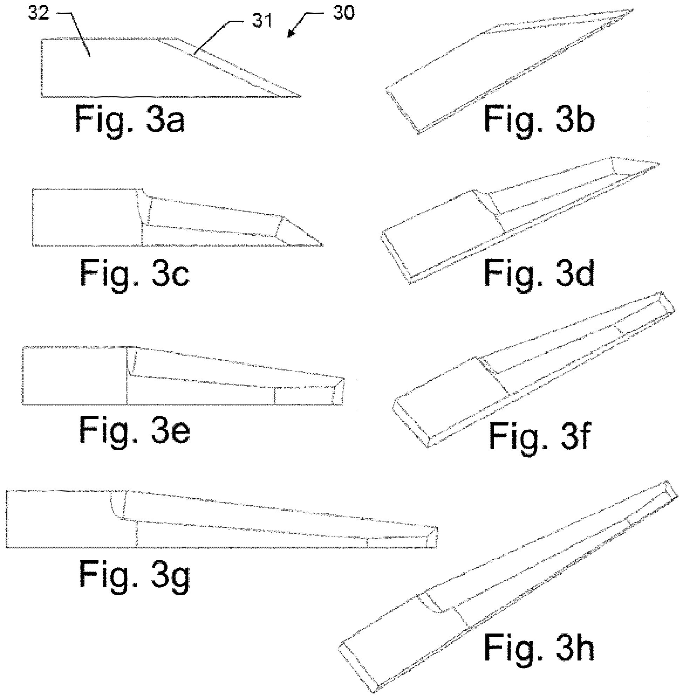

Die Figuren 3a bis 3h zeigen rein beispielhaft und nicht abschliessend verschiedene Messerformen von Schneidemaschinenmessern 30, die mit einem Schneidwerkzeug bzw. einer Schneidemaschine gemäss der vorliegenden Erfindung verwendbar sind. All diesen Messern sind die Klinge 31 und der Haltebereich 32 gemein. Im Gegensatz zu den Schneidwerkzeugen handelt es sich bei den Messern 30 üblicherweise und regelmässig um Verbrauchsmaterial.

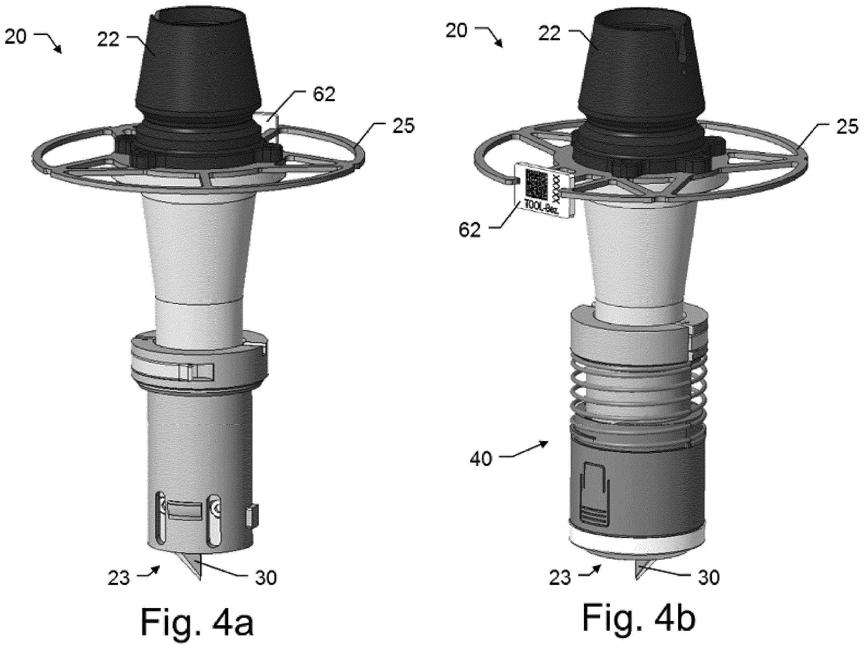

In den Figuren 4a-c sind verschiedene beispielhafte Ausführungsformen eines erfindungsgemässen Schneidwerkzeugs 20 dargestellt.

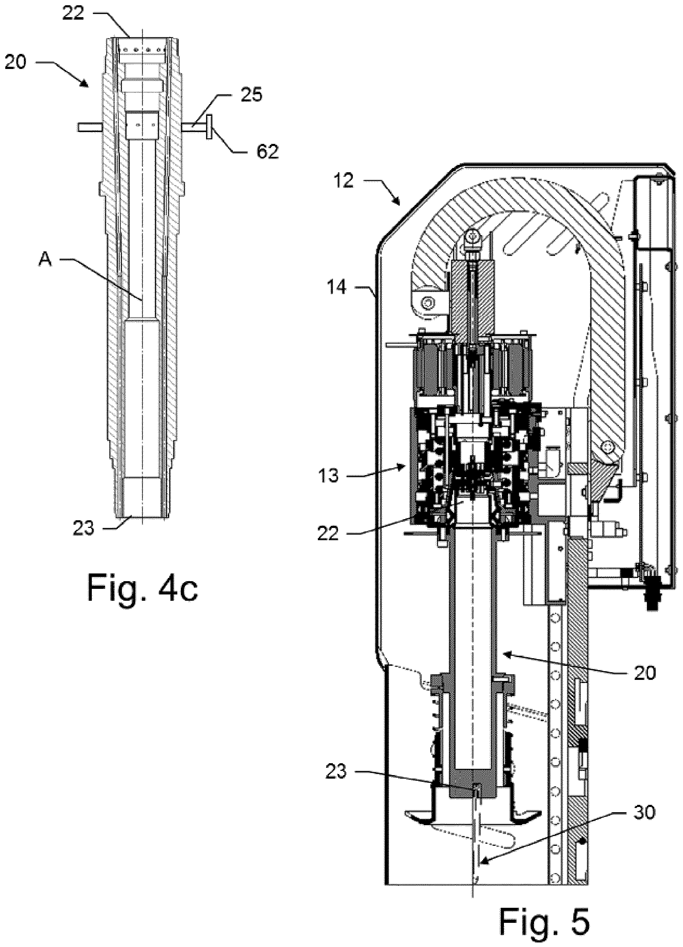

Die Figuren 4a und 4b zeigen eine erste und eine zweite beispielhafte Ausführungsform, wobei das Schneidwerkzeug der Figur 4b im Gegensatz zum Schneidwerkzeug der Figur 4a zusätzlich einen Gleitschuh 40 aufweist. Figur 4c zeigt eine dritte beispielhafte Ausführungsform eines erfindungsgemässen Schneidwerkzeugs 20 in einer Schnittansicht.

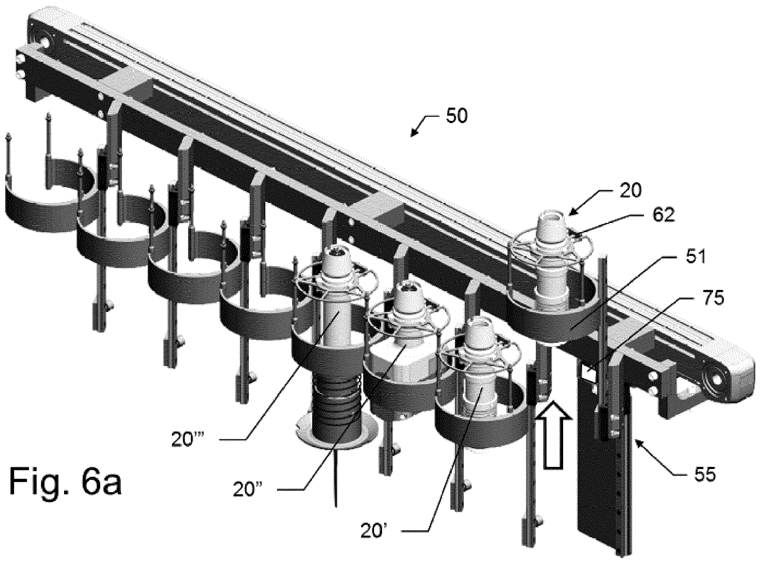

Die dargestellten Schneidwerkzeuge 20 weisen jeweils eine Längsachse A auf, an deren ersten (oberen) Ende ein Verbindungselement 22 zur Verbindung mit der Schneidemaschine, und an deren zweiten (unteren) Ende die Messerhalterung 23 zur Aufnahme des auswechselbaren Messers vorgesehen ist. Die Schneidwerkzeuge 20 weisen ausserdem jeweils eine Tragevorrichtung 25 auf, die vorteilhaft eine maschinelle Handhabung des Schneidwerkzeugs ermöglicht, insbesondere eine Bereitstellung in einer Werkzeugwechseleinheit (siehe Figuren 6a-b) der Schneidemaschine für ein automatisches Ein- und Auswechseln des Schneidwerkzeugs 20.

An dieser Tragevorrichtung ist ein Codeelement mit einem optisch erfassbaren Identifikationscodes 62 vorgesehen. Dieser kann insbesondere ein zweidimensionaler Code, wie beispielsweise ein DataMatrix-Code oder ein QR-Code, sein und stellt individuelle Identifikationsinformationen des Schneidwerkzeugs 20 für eine optische Sensoreinheit erfassbar bereit. Die individuellen Identifikationsinformationen ermöglichen die Zuordnung zu einem individuellen Schneidwerkzeug 20, ermöglichen also ein Erkennen eines bestimmten Werkzeuges und nicht nur des Werkzeugtyps. Der optisch erfassbare Identifikationscode 62 kann auch in Form eines Strichcodes vorliegen. Wenn die optische Sensoreinheit für Schrifterkennung ausgestaltet ist, kann der optisch erfassbare Identifikationscode 62 auch in Form von Ziffern oder anderen Schriftzeichen vorliegen.

Alternativ kann das Codeelement auch nicht-optisch erfassbare Identifikationscodes bereitstellen, die entweder berührungslos - beispielsweise in Form eines RFID-Chips - oder kontaktbasiert - beispielsweise in Form eines mechanisch abtastbaren oder über elektronische Kontakte auslesbaren Codes - erfassbar sein können. Das Codeelement kann auch zur Nahfeldkommunikation mit einer Sensoreinheit der Schneidemaschine ausgestaltet sein.

Figur 5 zeigt in einer Schnittdarstellung die Arbeitsgruppe 12 einer ersten beispielhaften Ausführungsform einer erfindungsgemässen Schneidemaschine, in welche ein Schneidwerkzeug 20 eingesetzt ist. In die Messerhalterung 23 ist ein Messer 30 eingesetzt. Die Arbeitsgruppe 12 weist eine Abdeckhaube 14 auf, unter welcher eine Aufnahmevorrichtung 13 zur Aufnahme des auswechselbaren Schneidwerkzeugs 20 angeordnet ist. Die Aufnahmevorrichtung 13 und das Verbindungselement 22 des Schneidwerkzeugs 20 sind zu einem automatisierten Auswechseln des Schneidwerkzeugs ausgestaltet.

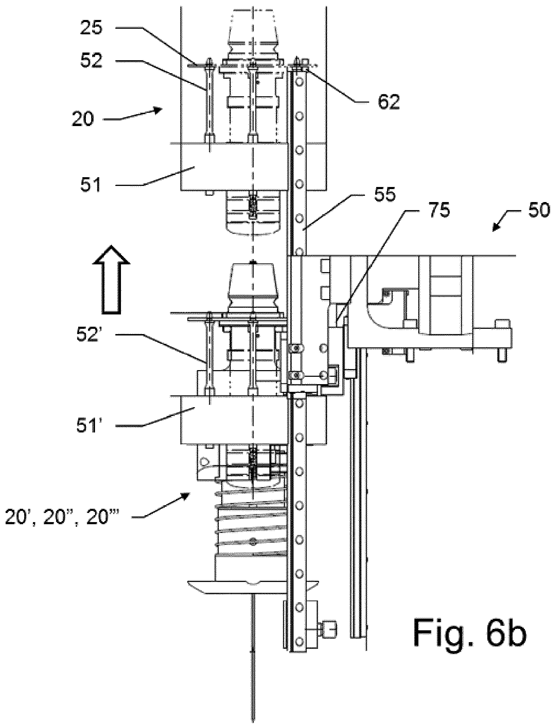

Die Figuren 6a und 6b zeigen eine beispielhafte Werkzeugwechseleinheit 50 als Teil der ersten Ausführungsform der erfindungsgemässen Schneidemaschine. Die gezeigte Werkzeugwechseleinheit 50 ist dazu ausgestaltet, eine Vielzahl an unterschiedlichen Schneidwerkzeugen 20, 20', 20", 20‴ bereitzustellen. Dazu weist sie eine Vielzahl von Haltevorrichtungen 51 auf.

Eine Sensoreinheit 75 ist an der Werkzeugwechseleinheit 50 angebracht. Diese ist dazu ausgestaltet, die Identifikationscodes 62 der Schneidewerkzeuge zu erfassen und die Identifikationsinformationen auszulesen, um ein individuelles Schneidwerkzeug automatisch erkennbar zu machen. Die Sensoreinheit 75 ist vorzugsweise so positioniert, dass ein Code 62 erfasst werden kann, wenn das jeweilige Schneidwerkzeug 20 in der Haltevorrichtung 51 befindlich ist. In der gezeigten Ausführungsform weist jede der Haltevorrichtungen 51 drei Stützen 52 auf, die dazu ausgestaltet sind, die Tragevorrichtung 25 des jeweiligen Schneidwerkzeugs 20 zu kontaktieren, die auch ein Codeelement aufweist, an welchem der Identifikationscode 62 bereitgestellt wird. Die Sensoreinheit 75 ist derart an der Werkzeugwechseleinheit 50 angebracht, dass dieser Code 62 erfassbar ist.

Ausserdem ist die Werkzeugwechseleinheit dazu ausgestaltet, ein automatisiertes Einsetzen eines Schneidwerkzeugs 20 in die Aufnahmevorrichtung und ein automatisiertes Auswechseln des in die Aufnahmevorrichtung eingesetzten Schneidwerkzeugs durch ein anderes Schneidwerkzeug 20', 20", 20‴ zu ermöglichen, das in der Werkzeugwechseleinheit 50 bereitgestellt wird. Dazu ist sie in Relation zu einem Bewegungsbereich der Arbeitsgruppe derart an der Schneidemaschine positioniert, dass die Aufnahmevorrichtung zum automatisierten Einsetzen oder Auswechseln eines Schneidwerkzeugs 20 oberhalb der Werkzeugwechseleinheit 50 positionierbar ist. Dabei kann die Sensoreinheit 75 auch so positioniert sein, dass der Code 62 bei einer Entnahme des Werkzeugs aus der Haltevorrichtung 51 erfassbar ist.

Ein Erfassen des Codes 62 vereinfacht die automatisierte Auswahl des richtigen Schneidwerkzeugs 20 zum Einsetzen in die Aufnahmevorrichtung 13.

In der in Figur 6a dargestellten Ausführungsform sind die Halteeinheiten 51 verfahrbar, und die Sensoreinheit 75 ist fest positioniert. Zum manuellen oder automatischen Einsetzen eines Schneidwerkzeugs in eine freie Halteeinheit 51 wird diese zur Position der Sensoreinheit 75 verfahren. Beim Einsetzen ist der Code 62 auslesbar, wobei das Schneidwerkzeug der Halteeinheit zugeordnet wird, sodass bei der Entnahme zum Einsetzen der Code nicht mehr ausgelesen zu werden braucht. Alternativ kann jede der Halteeinheiten 51 eine Sensoreinheit 75 aufweisen.

In einer alternativen Ausführungsform ist die Sensoreinheit 75 an einer Hebevorrichtung 55 vorgesehen. Die Hebeeinheit und die Sensoreinheit können zusammen horizontal an die Position einer gewünschten Halteeinheit 51 verschoben werden. Die so angefahrenen Halteeinheiten 51 können mittels der Hebevorrichtung vertikal verfahren werden, d. h. angehoben und wieder abgesenkt werden. Für das manuelle und automatische Auswechseln ist die Halteeinheit 51 anhebbar. Die Sensoreinheit 75 ist beispielsweise so positioniert, dass sie den Code lesen kann, wenn die Halteeinheit 51 abgesenkt ist.

Vorzugsweise kann die Sensoreinheit 75 in der Wechseleinheit 50 eine Zeilenkamera sein. Dies ermöglicht ein Auslesen eines optischen Codes im Vorbeifahren.

Vor dem Einsetzen des Schneidwerkzeugs in eine freie Halteeinheit 51 kann dem Schneidwerkzeug vorzugsweise ein Messer zugeordnet werden. Dies kann manuell erfolgen, beispielsweise über eine Benutzerschnittstelle mit Tastatur oder Barcodelesegerät, die an einem Bedienpult der Schneidemaschine oder einem externen Rüstplatz bereitgestellt sein können. Insbesondere kann dabei ein individueller Code oder ein Typcode des Messers erfasst werden, wobei der Messercode mit dem individuellen Code des Schneidwerkzeugs in einer Datenbank verknüpfbar ist. Ein Typcode kann dabei für eine Plausibilitätsprüfung des korrekten Messers verwendet werden. Zum manuellen Erfassen eines Codes, insbesondere eines DataMatrix-Codes, beispielsweise am Rüstplatz ("Rüstplatz-Sensoreinheit"), kann vorzugsweise eine Flächenkamera verwendet werden.

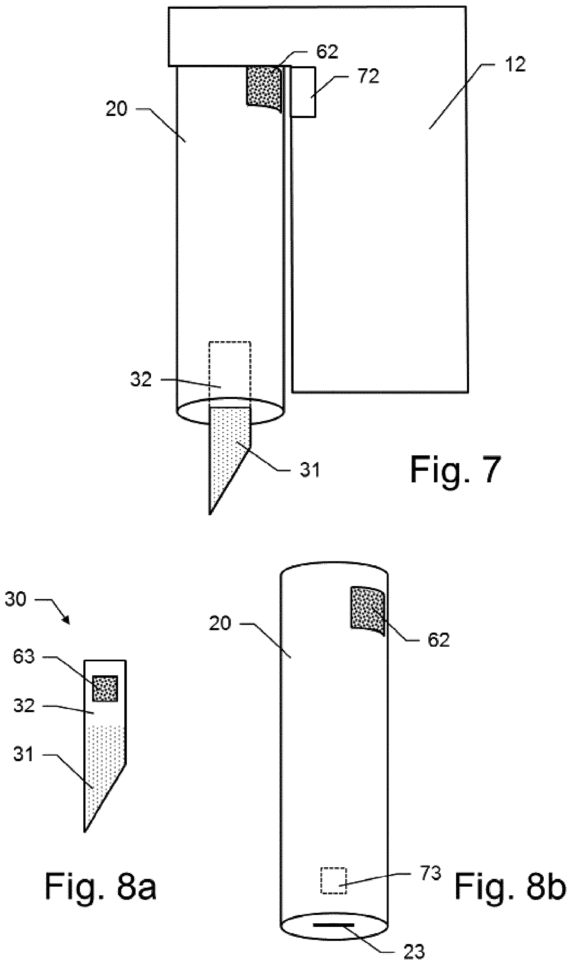

In Figur 7 wird eine zweite Ausführungsform einer erfindungsgemässen Schneidemaschine illustriert. Gezeigt ist die Arbeitsgruppe 12, an welcher ein auswechselbares Schneidwerkzeug 20 mit eingesetztem Messer angebracht ist. Das Messer ist mit dem Haltebereich 32 in das Schneidwerkzeug 20 eingeführt, so dass die Klinge 31 herausragt. In dieser Ausführungsform ist eine Sensoreinheit 72 an der Arbeitsgruppe 12 so positioniert, dass ein auf dem Schneidwerkzeug 20 angebrachter Identifikationscode 62 erfasst werden kann, wenn das Schneidwerkzeug in die Aufnahmevorrichtung der Arbeitsgruppe 12 eingesetzt ist.

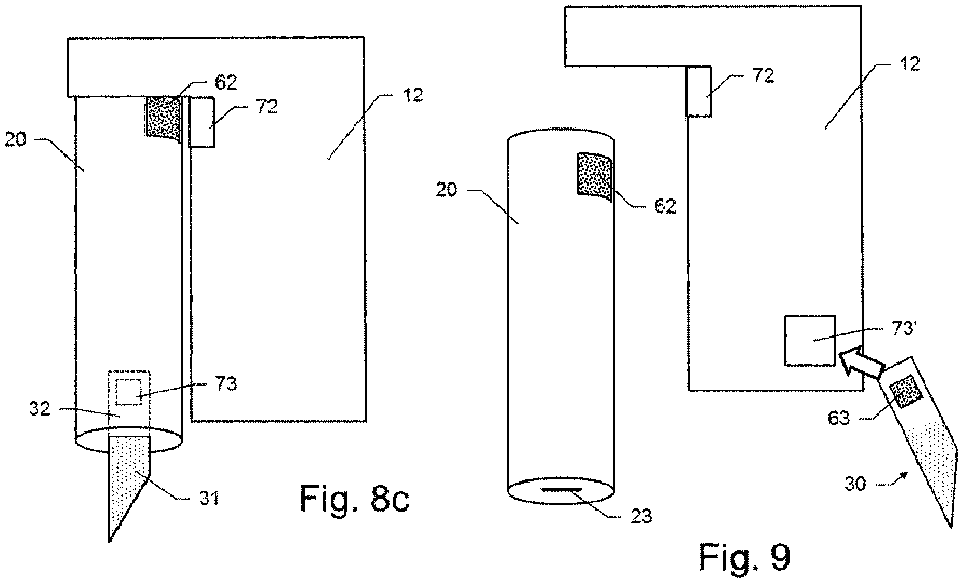

In den Figuren 8a-c wird eine dritte Ausführungsform einer erfindungsgemässen Schneidemaschine illustriert. Im Gegensatz zur zweiten Ausführungsform der Figur 7, weist hier das Messer 30 am Halteabschnitt 32 einen eigenen Identifikationscode 63 auf. Das Werkzeug 20 weist eine eigene Sensoreinheit 73 auf, die dazu ausgestaltet ist, den Code 63 zu erfassen, wenn das Messer 30 in die Messerhalterung 23 eingeführt ist.

In Figur 9 wird eine vierte Ausführungsform einer erfindungsgemässen Schneidemaschine illustriert. Im Gegensatz zur dritten Ausführungsform der Figuren 8a-c, ist eine zweite Sensoreinheit 73' aussen an der Arbeitsgruppe 12 angebracht. Der Identifikationscode 63 des Messers 30 wird erfasst, bevor es in das Werkzeug eingesetzt wird, indem der Benutzer es am Sensor 73' vorbeiführt oder an diesen anhält.

Die verschiedenen Ausführungsformen können natürlich miteinander kombiniert werden. So könnte beispielsweise die zweite Sensoreinheit 73' an der Werkzeugwechseleinheit 50 angebracht sein, oder die Schneidemaschine könnte Sensoreinheiten 72, 75 sowohl an der Werkzeugwechseleinheit 50 als auch an der Arbeitsgruppe 12 oder einem Bedienpult aufweisen.

Eine weitere Sensoreinheit kann für das Verknüpfen ("Verheiraten") von Werkzeug 20, Messer 30 und ggf. Gleitschuh 40 (vgl. Figur 4b) an einem Rüstplatz angebracht sein. Dieser Rüstplatz kann in einem Bedienpult der Schneidemaschine 1 angeordnet sein, aber auch separat und für eine oder mehrere Schneidmaschinen verfügbar sein. An diesem Rüstplatz werden, insbesondere manuell durch einen Benutzer der Schneidmaschine(n), Schneidwerkzeuge 20 mit Messern 30 und ggf. Gleitschuhen 40 bestückt. Der Rüstplatz kann eine Sensoreinheit ("Rüstplatz-Sensoreinheit"), insbesondere in Form einer Flächenkamera, aufweisen, die mit der Recheneinheit verbunden ist. Die Rüstplatz-Sensoreinheit kann insbesondere die zweite Sensoreinheit 73,73' ersetzen oder ergänzen.

Werkzeug 20, Messer 30 und Gleitschuh 40 weisen dazu durch die Rüstplatz-Sensoreinheit erfassbare Codes, z. B. DataMatrix-Codes auf. Mittels der Rüstplatz-Sensoreinheit können durch aufeinanderfolgendes Erfassen der jeweiligen Codes, Schneidwerkzeug 20, Messer 30 und Gleitschuh 40 in einer Datenbank logisch miteinander verknüpft werden, sodass eine aktuelle Bestückung eines jeden individuellen Schneidwerkzeugs 20 der Recheneinheit bekannt ist. Die Betriebsüberwachung kann so für Werkzeug, Messer und Gleitschuh gebündelt erfolgen.

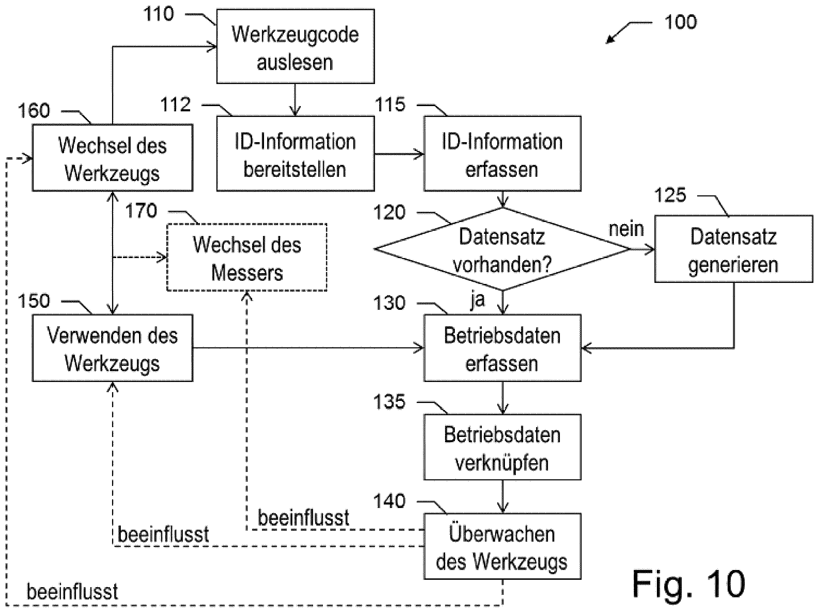

Figur 10 zeigt ein Flussdiagramm zur Illustration einer beispielhaften Ausführungsform eines Verfahrens 100. Im Rahmen dieses Verfahrens wird zunächst ein Identifikationscode eines Schneidwerkzeugs durch einen entsprechenden Sensor der Schneidemaschine ausgelesen 110. Dies geschieht insbesondere jeweils bei einem Wechsel 160 des Werkzeugs. Die Identifikationsinformationen (ID-Informationen) umfassen vorzugsweise auch Informationen über den Werkzeugtyp. Die im Code verschlüsselten Informationen werden an eine Recheneinheit der Schneidemaschine bereitgestellt 112 und von dieser erhalten und erfasst 115. Es wird dann durch die Recheneinheit geprüft 120, ob ein entsprechender Datensatz in einer Datenbank bereits vorhanden ist. Wenn nicht, wird ein solcher Datensatz erstellt 125. Anschliessend werden Betriebsdaten des Schneidwerkzeugs erfasst 130. Dabei wird davon ausgegangen, dass das Schneidwerkzeug, dessen Identifikationsinformationen von dem Sensor bereitgestellt wurden, auch das in der Schneidemaschine verwendete 150 Werkzeug ist. Die Betriebsdaten umfassen insbesondere eine Dauer und Intensität des Werkzeugeinsatzes. Auch Daten über das bearbeitete Material können umfasst sein. Die erfassten Betriebsdaten werden in der Datenbank mit dem entsprechenden Schneidwerkzeug verknüpft 135. Die verknüpften Daten des Werkzeugs bzw. vorzugsweise einer Vielzahl gleicher und/oder verschiedener Werkzeuge wird dann zur Durchführung einer Betriebsüberwachung 140 ("Monitoring") des Werkzeugs oder der Werkzeuge eingesetzt. Die Betriebsüberwachung 140 beeinflusst, welche Werkzeuge verwendet werden 150, wann sie ausgewechselt werden 160, beispielsweise für eine Wartung, und unter Umständen auch, wann ein Messer des Werkzeugs durch ein neues ausgewechselt wird 170.

Die Betriebsüberwachung 140 kann insbesondere als Basis zum Festlegen von Auswechsel- und Wartungsrhythmen dienen. So kann nach einer bestimmten Betriebszeit eines Schneidewerkzeugs von der Recheneinheit automatisch ein Auswechseln dieses Schneidewerkzeugs durch ein gleiches ausgelöst werden - beispielsweise ein automatisches Auswechseln mittels einer Werkzeugwechseleinheit oder ein manuelles Auswechseln durch Ausgabe einer Handlungsanweisung an einen Benutzer der Schneidemaschine. Ebenso kann der Ersatz eines aufgrund der erfassten Betriebsdaten mutmasslich abgenutzten Messers initiiert werden. Werkzeuge können dabei auf verschiedenen Schneidemaschinen verwendet werden, und ein Messer kann in verschiedenen Werkzeugen verwendet werden.

Als Betriebsdaten können optional auch Leistungsdaten des Schneidewerkzeugs erfasst werden. Die Betriebsüberwachung kann dann ein Erkennen von Mustern und darauf basierend Maschinelles Lernen (ML) umfassen. So können beispielsweise regelmässig auftretende Leistungsverringerungen bzw. Leistungseinbrüche bestimmter Schneidwerkzeugtypen nach bestimmten Betriebszeiten als Muster erkannt werden. Diese Muster können dann verwendet werden, um das Auswechselintervall für diesen Schneidwerkzeugtyp anzupassen. Werden mehrere Schneidemaschinen bzw. Recheneinheiten für einen Datenaustausch zu einem Netzwerk miteinander verbunden, beispielsweise über das "Internet of Things" (IoT), können die Mustererkennung und das ML systemweit erfolgen und entsprechend effizienter sein. Die Erkenntnisse des ML können dann als Feedback an alle an das IoT-Netzwerk angeschlossenen Maschinen ausgegeben werden, sodass beispielsweise die Wartungsintervalle entsprechend angepasst werden können.

In einigen Ausführungsformen der Schneidmaschine ist eine weitere Sensorik für die Initialisierung der Werkzeuge in Z-Richtung angebracht. Diese ist optisch ausgeführt. Nach der Initialisierung kann das Bild des Messers mit den Geometriedaten in der Datenbank abgeglichen werden um zu plausibilisieren, ob das korrekte Messer eingesetzt ist.

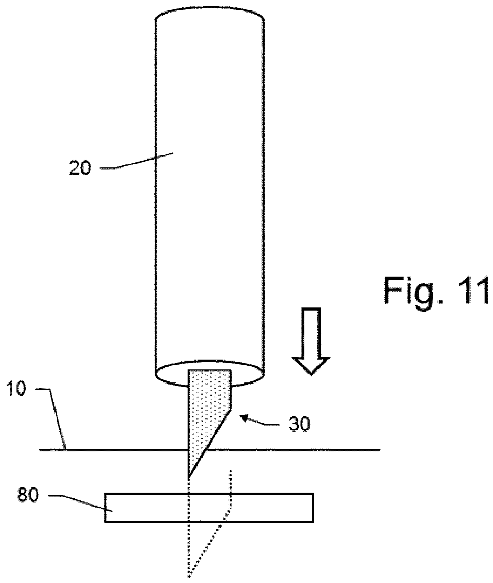

Diese Sensorik ist insbesondere dann hilfreich, wenn Messerinformation nicht automatisch eingelesen werden, sondern beim händischen Einsetzen des Messers durch einen Benutzer von diesem händisch erfasst werden. Figur 11 zeigt als Sensorik einer solchen beispielhaften Ausführungsform einer erfindungsgemässen Schneidemaschine einen Zeilensensor 80. Dieser ist unterhalb der Ebene der Arbeitsfläche 10 angeordnet, beispielsweise am Rand der Arbeitsfläche 10 oder in einer Vertiefung. Die Arbeitsgruppe der Schneidemaschine ist so verfahrbar, dass das Schneidwerkzeug 20 oberhalb des Zeilensensors 80 positionierbar ist und an dieser Position derart absenkbar ist, dass ein im Schneidwerkzeug 20 eingesetztes Messer 30 durch eine vom Zeilensensor 80 erfasste horizontale Ebene vertikal hindurchgeführt wird. Alternativ oder zusätzlich kann auch der Zeilensensor in Richtung des Schneidwerkzeugs 20 bewegbar ausgestaltet sein.

Die Form der Messerklinge kann so durch den Zeilensensor 80 ermittelt werden, wobei Deformierungen und Beschädigungen der Klinge erkennbar sind und an die Recheneinheit übermittelt werden können, um ein Austauschen des Messers 30 bzw. des gesamten Schneidwerkzeugs 20 auszulösen. Vorteilhaft kann auch eine Plausibilitätsprüfung erfolgen, bei welcher eine bekannte Klingenform eines mutmasslich im Schneidwerkzeug 20 eingesetzten Messers 30 mit der ermittelten Form des tatsächlich im Schneidwerkzeug 20 befindlichen Messers 30 verglichen wird. Auf diese Weise können Fehler beim manuellen Einsetzen eines Messers oder beim Erfassen der Messerdaten am Rüstplatz vor dem Verwenden des Messers erkannt werden. Dies kann vorteilhaft Beschädigungen am zu schneidenden Objekt, an der Arbeitsfläche 10 oder am Schneidwerkzeug 20 verhindern, beispielsweise, wenn das eingesetzte Messer länger ist, als das Messer, dessen Daten fälschlicherweise mit dem Schneidwerkzeug 20 verknüpft wurden.

Es versteht sich, dass diese dargestellten Figuren nur mögliche Ausführungsbeispiele schematisch darstellen. Die verschiedenen Ansätze - insbesondere des ersten und zweiten Aspekts der Erfindung - können ebenso miteinander sowie mit Vorrichtungen oder Verfahren des Stands der Technik kombiniert werden.

Als Betriebsdaten können optional auch Leistungsdaten des Schneidewerkzeugs erfasst werden. Die Betriebsüberwachung kann dann ein Erkennen von Mustern und darauf basierend Maschinelles Lernen (ML) umfassen. So können beispielsweise regelmässig auftretende Leistungsverringerungen bzw. Leistungseinbrüche bestimmter Schneidwerkzeugtypen nach bestimmten Betriebszeiten als Muster erkannt werden. Diese Muster können dann verwendet werden, um das Auswechselintervall für diesen Schneidwerkzeugtyp anzupassen. Werden mehrere Schneidemaschinen bzw. Recheneinheiten für einen Datenaustausch zu einem Netzwerk miteinander verbunden, beispielsweise über das "Internet of Things" (IoT), können die Mustererkennung und das ML systemweit erfolgen und entsprechend effizienter sein. Die Erkenntnisse des ML können dann als Feedback an alle an das IoT-Netzwerk angeschlossenen Maschinen ausgegeben werden, sodass beispielsweise die Wartungsintervalle entsprechend angepasst werden können.

In einigen Ausführungsformen der Schneidmaschine ist eine weitere Sensorik für die Initialisierung der Werkzeuge in Z-Richtung angebracht. Diese ist optisch ausgeführt. Nach der Initialisierung kann das Bild des Messers mit den Geometriedaten in der Datenbank abgeglichen werden um zu plausibilisieren, ob das korrekte Messer eingesetzt ist. Diese Sensorik ist insbesondere dann hilfreich, wenn Messerinformation nicht automatisch eingelesen werden, sondern beim händischen Einsetzen des Messers durch einen Benutzer von diesem händisch erfasst werden. Figur 11 zeigt als Sensorik einer solchen beispielhaften Ausführungsform einer erfindungsgemässen Schneidemaschine einen Zeilensensor 80. Dieser ist unterhalb der Ebene der Arbeitsfläche 10 angeordnet, beispielsweise am Rand der Arbeitsfläche 10 oder in einer Vertiefung. Die Arbeitsgruppe der Schneidemaschine ist so verfahrbar, dass das Schneidwerkzeug 20 oberhalb des Zeilensensors 80 positionierbar ist und an dieser Position derart absenkbar ist, dass ein im Schneidwerkzeug 20 eingesetztes Messer 30 durch eine vom Zeilensensor 80 erfasste horizontale Ebene vertikal hindurchgeführt wird. Alternativ oder zusätzlich kann auch der Zeilensensor in Richtung des Schneidwerkzeugs 20 bewegbar ausgestaltet sein.

Die Form der Messerklinge kann so durch den Zeilensensor 80 ermittelt werden, wobei Deformierungen und Beschädigungen der Klinge erkennbar sind und an die Recheneinheit übermittelt werden können, um ein Austauschen des Messers 30 bzw. des gesamten Schneidwerkzeugs 20 auszulösen. Vorteilhaft kann auch eine Plausibilitätsprüfung erfolgen, bei welcher eine bekannte Klingenform eines mutmasslich im Schneidwerkzeug 20 eingesetzten Messers 30 mit der ermittelten Form des tatsächlich im Schneidwerkzeug 20 befindlichen Messers 30 verglichen wird. Auf diese Weise können Fehler beim manuellen Einsetzen eines Messers oder beim Erfassen der Messerdaten am Rüstplatz vor dem Verwenden des Messers erkannt werden. Dies kann vorteilhaft Beschädigungen am zu schneidenden Objekt, an der Arbeitsfläche 10 oder am Schneidwerkzeug 20 verhindern, beispielsweise, wenn das eingesetzte Messer länger ist, als das Messer, dessen Daten fälschlicherweise mit dem Schneidwerkzeug 20 verknüpft wurden.

Es versteht sich, dass diese dargestellten Figuren nur mögliche Ausführungsbeispiele schematisch darstellen.

## Patentansprüche

1. Schneidemaschine (1), aufweisend
- eine Arbeitsfläche (10), die zur Aufnahme mindestens eines zu schneidenden Objekts ausgestaltet ist, und
- eine Arbeitsgruppe (12), die beweglich über der Arbeitsfläche (10) angeordnet ist und eine Aufnahmevorrichtung (13) zur Aufnahme eines ersten auswechselbaren Schneidwerkzeugs (20) aufweist, welches eine Messerhalterung (23) zur Aufnahme eines Halteabschnitts (32) eines Schneidemaschinenmessers (30) aufweist,
wobei die Schneidemaschine eine Recheneinheit (15) aufweist oder mit einer Recheneinheit (15) verbindbar ist, wobei die Recheneinheit (15) einen Prozessor mit Rechenkapazität und Algorithmen zur Steuerung der Schneidemaschine (1) und Speicherkapazität zum Bereitstellen einer Datenbank aufweist,
**gekennzeichnet durch**
- eine erste Sensoreinheit (72, 75), die ausgestaltet ist zum Erfassen individueller Identifikationsinformationen des ersten Schneidwerkzeugs (20) und zum Bereitstellen erfasster Identifikationsinformationen an die Recheneinheit (15), und
- eine Werkzeugwechseleinheit (50) zum automatisierten Einsetzen eines Schneidwerkzeugs (20, 20', 20", 20‴) in die Aufnahmevorrichtung (13), wobei die Sensoreinheit (75) an der Werkzeugwechseleinheit (50) angebracht ist und dazu ausgestaltet, die Identifikationsinformationen des ersten Schneidwerkzeugs (20) zu erfassen, wenn das erste Schneidwerkzeug (20) in der Werkzeugwechseleinheit (50) befindlich ist oder in die Aufnahmevorrichtung (13) eingesetzt wird,
wobei die Recheneinheit (15) dazu ausgestaltet ist,
- das erste Schneidwerkzeug (20) basierend auf den Identifikationsinformationen zu erkennen, und
- Betriebsdaten des ersten Schneidwerkzeugs (20) zu erfassen und in der Datenbank abzuspeichern, wobei die Betriebsdaten mindestens eine Betriebszeit des Schneidwerkzeugs umfassen, und
- in der Datenbank das erste Schneidwerkzeug (20) mit dem Messer (30) zu verknüpfen, und
- basierend auf den Betriebsdaten eine Betriebsüberwachung des ersten Schneidwerkzeugs (20) durchzuführen,
wobei die Betriebsüberwachung ein Überwachen von Betriebszeiten und/oder Zuständen der Vielzahl von Schneidwerkzeugen (20, 20', 20", 20‴) und/oder in den Schneidwerkzeugen eingesetzten Messern (30) umfasst, wobei die Recheneinheit (15) dazu ausgestaltet ist, auf Basis der Betriebsüberwachung
- ein Wartungsintervall für ein erstes Schneidwerkzeug (20) festzulegen, und/oder
- eine Wartung für ein erstes Schneidwerkzeug (20) auszulösen, und/oder
- ein Auswechselintervall für eine Vielzahl von Schneidwerkzeugen (20, 20', 20", 20‴) festzulegen, insbesondere für zwei oder mehr gleichartige Schneidwerkzeuge, und/oder
- eine Auswechslung des ersten Schneidwerkzeugs (20) auszulösen, und/oder
- ein Auswechselintervall für Messer (30) festzulegen, und/oder
- eine Auswechslung eines Messers (30) auszulösen.

2. Schneidemaschine (1) nach Anspruch 1,
**dadurch gekennzeichnet, dass**
die Recheneinheit (15) dazu ausgestaltet ist,
- Identifikationsinformationen einer Vielzahl von auswechselbaren Schneidwerkzeugen (20, 20', 20", 20‴) in der Datenbank zu speichern,
- Betriebsdaten für jedes Schneidwerkzeug der Vielzahl von Schneidwerkzeugen (20, 20', 20", 20‴) zu erfassen und in der Datenbank abzuspeichern, und
- basierend auf den Betriebsdaten eine Betriebsüberwachung der Vielzahl von Schneidwerkzeugen (20, 20', 20", 20‴) durchzuführen.

3. Schneidemaschine (1) nach Anspruch 1 oder Anspruch 2, **dadurch gekennzeichnet, dass**
eine automatische Auswahl des ersten Schneidwerkzeugs (20) zum Einsetzen in die Aufnahmevorrichtung (13) auf den erfassten Identifikationsinformationen des ersten Schneidwerkzeugs (20) basiert.

4. Schneidemaschine (1) nach einem der vorangehenden Ansprüche,
**dadurch gekennzeichnet, dass**
die Werkzeugwechseleinheit (50)
- zum automatisierten Auswechseln eines in der Aufnahmevorrichtung (13) befindlichen Schneidwerkzeugs durch ein anderes Schneidwerkzeug (20, 20', 20'', 20‴) ausgestaltet ist, wobei das andere Schneidwerkzeug in der Werkzeugwechseleinheit (50) bereitgestellt wird; und/oder
- dazu ausgestaltet ist, eine Vielzahl an unterschiedlichen Schneidwerkzeugen (20, 20', 20", 20‴) bereitzustellen.

5. Schneidemaschine (1) nach einem der vorangehenden Ansprüche,
**dadurch gekennzeichnet, dass**
die Werkzeugwechseleinheit (50) in Relation zu einem Bewegungsbereich der Arbeitsgruppe (12) derart an der Schneidemaschine positioniert ist, dass die Aufnahmevorrichtung (13) zum automatisierten Einsetzen oder Auswechseln des ersten Schneidwerkzeugs (20) an der Werkzeugwechseleinheit (50) positionierbar ist, insbesondere oberhalb der Werkzeugwechseleinheit (50) positionierbar ist.

6. Schneidemaschine (1) nach einem der vorangehenden Ansprüche,
**dadurch gekennzeichnet, dass**
die Werkzeugwechseleinheit (50) eine Vielzahl von Haltevorrichtungen (51) zum Bereitstellen einer Vielzahl an Schneidwerkzeugen (20, 20', 20", 20‴) aufweist, wobei jede der Haltevorrichtungen (51) mindestens eine Stütze (52) aufweist, die dazu ausgestaltet ist, eine Tragevorrichtung (25) eines bereitgestellten Schneidwerkzeugs zu kontaktieren, wobei die Sensoreinheit (75) an der Werkzeugwechseleinheit (50) angebracht ist und ausgestaltet, an der Tragevorrichtung (25) des ersten Schneidwerkzeugs (20) bereitgestellte Identifikationsinformationen des ersten Schneidwerkzeugs (20) zu erfassen, wenn das erste Schneidwerkzeug (20) in der Werkzeugwechseleinheit (50) befindlich ist.

7. Schneidemaschine (1) nach einem der vorangehenden Ansprüche,
**dadurch gekennzeichnet, dass**
die erste Sensoreinheit (72, 75) eine optische Sensoreinheit ist, die ausgestaltet ist zum Erfassen eines optisch erfassbaren Identifikationscodes (62), insbesondere eines DataMatrix-Codes, auf dem ersten Schneidwerkzeug (20), wobei der Identifikationscode jeweils die individuellen Identifikationsinformationen des ersten Schneidwerkzeugs (20) für die erste Sensoreinheit (72, 75) erfassbar bereitstellt.

8. Schneidemaschine (1) nach einem der vorangehenden Ansprüche,
**dadurch gekennzeichnet, dass**
die erste Sensoreinheit (72, 75) ein RFID-Lesegerät aufweist, das ausgestaltet ist zum Erfassen eines in einem RFID-Transponder des Schneidwerkzeugs bereitgestellten Identifikationscodes, wobei der Identifikationscode jeweils die individuellen Identifikationsinformationen des ersten Schneidwerkzeugs (20) für die erste Sensoreinheit (72, 75) erfassbar bereitstellt.

9. Schneidemaschine (1) nach einem der vorangehenden Ansprüche,
**dadurch gekennzeichnet, dass**
die erste Sensoreinheit (72, 75) zum Auslesen der Identifikationsinformationen zur mechanischen Kontaktierung des Schneidwerkzeugs ausgestaltet ist, insbesondere zum Herstellen eines elektrischen Kontakts mit einer Speichereinheit des Schneidwerkzeugs oder zum Abtasten eines auf einer Oberfläche des Schneidwerkzeugs angebrachten erhabenen Identifikationscodes, wobei der Identifikationscode jeweils die individuellen Identifikationsinformationen des ersten Schneidwerkzeugs (20) für die erste Sensoreinheit (72, 75) erfassbar bereitstellt.

10. Schneidemaschine (1) nach einem der vorangehenden Ansprüche,
**dadurch gekennzeichnet, dass**
- die Schneidemaschine (1) eine zweite Sensoreinheit (73, 73') aufweist, die zum Erfassen individueller Identifikationsinformationen des Messers (30) und zum Bereitstellen erfasster Identifikationsinformationen an die Recheneinheit (15) ausgestaltet ist, insbesondere wobei die zweite Sensoreinheit (73, 73') eine optische Sensoreinheit ist, die ausgestaltet ist zum Erfassen eines optisch erfassbaren Identifikationscodes (63) auf dem Messer (30), wobei der Identifikationscode die individuellen Identifikationsinformationen des Messers (30) für die zweite Sensoreinheit (73, 73') erfassbar bereitstellt; und
- die Recheneinheit (15) dazu ausgestaltet ist,
- das Messer (30) basierend auf den Identifikationsinformationen zu erkennen,
- Betriebsdaten des Messers (30) zu erfassen und in der Datenbank abzuspeichern, wobei die Betriebsdaten mindestens eine Betriebszeit des Messers umfassen,
- die Betriebsdaten des ersten Schneidwerkzeugs (20) und Betriebsdaten des Messers (30) und in der Datenbank miteinander zu verknüpfen,
- basierend auf den Betriebsdaten eine Betriebsüberwachung des Messers (30) durchzuführen, und/oder
- auch basierend auf Betriebsdaten einer Vielzahl an Messern (30) auszuwählen, welches der in einer Werkzeugwechseleinheit (50) der Schneidemaschine (1) bereitgestellten Schneidwerkzeuge (20, 20', 20", 20‴) in die Aufnahmevorrichtung (13) eingesetzt wird.

11. Schneidemaschine (1) nach einem der vorangehenden Ansprüche,
**dadurch gekennzeichnet, dass**
- die Schneidemaschine (1) eine Rüstplatz-Sensoreinheit, insbesondere ausgebildet als eine Flächenkamera, aufweist, die ausgestaltet ist zum Erfassen individueller Identifikationsinformationen des ersten Schneidwerkzeugs (20) und des Messers (30) und zum Bereitstellen erfasster Identifikationsinformationen an die Recheneinheit (15), und
- die Recheneinheit (15) dazu ausgestaltet ist, das erste Schneidwerkzeug (20) und das Messer (30) basierend auf den Identifikationsinformationen zu erkennen,

12. Schneidemaschine (1) nach Anspruch 11,
**dadurch gekennzeichnet, dass**
- die Rüstplatz-Sensoreinheit an einem der Schneidemaschine (1) zugeordneten Rüstplatz, insbesondere einem Bedienpult der Schneidemaschine (1), derart angeordnet ist, dass das erste Schneidwerkzeug (20) und das Messer (30) durch einen Benutzer der Schneidemaschine (1) manuell derart an die Rüstplatz-Sensoreinheit annäherbar ist, dass ein Identifikationscode des ersten Schneidwerkzeugs (20) bzw. des Messers (30), der die individuellen Identifikationsinformationen für die Rüstplatz-Sensoreinheit erfassbar bereitstellt, von der Rüstplatz-Sensoreinheit erfassbar ist;
- die Recheneinheit (15) dazu ausgestaltet ist, in der Datenbank ein Schneidwerkzeug (20) und ein Messer (30) miteinander zu verknüpfen, deren individuelle Identifikationsinformationen aufeinanderfolgend durch die Rüstplatz-Sensoreinheit erfasst wurden; und/oder
- die Rüstplatz-Sensoreinheit ausgestaltet ist zum Erfassen individueller Identifikationsinformationen eines Gleitschuhs (40), der zum Verbinden mit dem ersten Schneidwerkzeug (20) ausgestaltet ist, wobei die Recheneinheit (15) dazu ausgestaltet ist, den Gleitschuh (40) basierend auf den Identifikationsinformationen zu erkennen und in der Datenbank mit dem ersten Schneidwerkzeug (20) und dem Messer (30) zu verknüpfen.

13. Schneidemaschine (1) nach einem der vorangehenden Ansprüche,
**gekennzeichnet durch**
einen Klingensensor (80), insbesondere ausgestaltet als ein Zeilensensor, zum Erfassen einer Klingenform eines in das erste Schneidwerkzeug (20) eingesetzten Messers (30).

14. Schneidemaschine (1) nach Anspruch 13,
**dadurch gekennzeichnet, dass**
- Informationen über eine Vielzahl an Messertypen in der Recheneinheit (15) gespeichert sind und Informationen über eine Klingenform des jeweiligen Messertyps aufweisen, und
- die Recheneinheit dazu ausgestaltet ist, anhand der von dem Klingensensor (80) erfassten Klingenform einen Messertyp des in das erste Schneidwerkzeug (20) eingesetzten Messers (30) zu ermitteln.

15. Verwendung eines Schneidwerkzeuges (20) in einer Schneidemaschine (1) nach einem der vorangehenden Ansprüche, wobei das Schneidwerkzeug (20) auswechselbar in eine Aufnahmevorrichtung (13) der Schneidemaschine (1) einsetzbar ausgestaltet ist und eine Messerhalterung (23) zur Aufnahme eines Halteabschnitts (32) eines Schneidemaschinenmessers (30) aufweist,
wobei das Schneidwerkzeug (20) ein Codeelement aufweist, das individuelle Identifikationsdaten des Schneidwerkzeugs (20) für eine erste Sensoreinheit (72, 75) der Schneidemaschine (1) erfassbar bereitstellt, wobei die individuellen Identifikationsdaten dazu ausgestaltet sind, eine individuelle Identifizierung des Schneidwerkzeugs (20) zu ermöglichen.

## Claims

1. A cutting machine (1), comprising
- a work surface (10), which is designed to accommodate at least one object to be cut, and
- a working group (12), which is arranged so it is movable above the work surface (10) and comprises a receptacle device (13) for accommodating a first replaceable cutting tool (20), comprising a cutter holder (23) for accommodating a holding section (32) of a cutting machine cutter (30),
wherein the cutting machine comprises a processing unit (15) or is connectable to a processing unit (15), wherein the processing unit (15) comprises a processor having processing capacity and algorithms for controlling the cutting machine (1) and storage capacity for providing a database,
**characterized by**
- a first sensor unit (72, 75), which is designed to detect individual items of identification information of the first cutting tool (20) and to provide detected items of identification information to the processing unit (15), and
- a tool changing unit (50) for the automated insertion of a cutting tool (20, 20', 20", 20‴) into the receptacle device (13), wherein the sensor unit (75) is attached to the tool changing unit (50) and is designed to detect the items of identification information of the first cutting tool (20) when the first cutting tool (20) is located in the tool changing unit (50) or is inserted into the receptacle device (13),
wherein the processing unit (15) is designed to
- recognize the first cutting tool (20) based on the items of identification information, and
- detect operating data of the first cutting tool (20), and store these data in the database, wherein the operating data comprise at least one operating time of the cutting tool, and
- link the first cutting tool (20) to the cutter (30) in the database, and
- carry out operational monitoring of the first cutting tool (20) based on the operating data,
wherein the operational monitoring comprises monitoring of operating times and/or states of the plurality of cutting tools (20, 20', 20", 20‴) and/or cutters (30) inserted into the cutting tools, wherein the processing unit (15) is designed, based on the operational monitoring, to
- define a maintenance interval for a first cutting tool (20), and/or
- trigger maintenance for a first cutting tool (20), and/or
- define a replacement interval for a plurality of cutting tools (20, 20', 20", 20‴), in particular for two or more similar cutting tools, and/or
- trigger a replacement of the first cutting tool (20), and/or
- define a replacement interval for cutters (30), and/or
- trigger a replacement of a cutter (30).

2. The cutting machine (1) according to claim 1,
**characterized in that**
the processing unit (15) is designed to
- store items of identification information of a plurality of replaceable cutting tools (20, 20', 20", 20‴) in the database,
- detect operating data for each cutting tool of the plurality of cutting tools (20, 20', 20", 20‴) and store these data in the database, and
- carry out operational monitoring of the plurality of cutting tools (20, 20', 20", 20‴) based on the operating data.

3. The cutting machine (1) according to any one of claims 1 to 2,
**characterized in that**
an automatic selection of the first cutting tool (20) for insertion into the receptacle device (13) is based on the detected items of identification information of the first cutting tool (20).

4. The cutting machine (1) according to any one of the preceding claims, **characterized in that**
the tool changing unit (50)
- is designed for the automated replacement of a cutting tool located in the receptacle device (13) with another cutting tool (20, 20', 20", 20‴), wherein the other cutting tool is provided in the tool changing unit (50); and/or
- is designed to provide a plurality of different cutting tools (20, 20', 20", 20‴).

5. The cutting machine (1) according to any one of the preceding claims,
**characterized in that**
the tool changing unit (50) is positioned on the cutting machine in relation to a movement range of the working group (12) in such a way that the receptacle device (13) is automatically positionable on the tool changing unit (50) for the automated insertion or replacement of the first cutting tool (20), in particular is positionable above the tool changing unit (50).

6. The cutting machine (1) according to any one of the preceding claims,
**characterized in that**
the tool changing unit (50) comprises a plurality of holding devices (51) for providing a plurality of cutting tools (20, 20', 20", 20‴), wherein each of the holding devices (51) comprises at least one support (52), which is designed to contact a supporting device (25) of a provided cutting tool, wherein the sensor unit (75) is attached to the tool changing unit (50) and is designed to detect items of identification information of the first cutting tool (20) provided on the supporting device (25) of the first cutting tool (20) when the first cutting tool (20) is located in the tool changing unit (50).

7. The cutting machine (1) according to any one of the preceding claims,
**characterized in that**
the first sensor unit (72, 75) is an optical sensor unit, which is designed to detect an optically detectable identification code (62), in particular a DataMatrix code, on the first cutting tool (20), wherein the identification code in each case provides the individual items of identification information of the first cutting tool (20) so they are detectable by the first sensor unit (72, 75).

8. The cutting machine (1) according to any one of the preceding claims,
**characterized in that**
the first sensor unit (72, 75) comprises an RFID read device, which is designed to detect on identification code provided in an RFID transponder of the cutting tool, wherein the identification code in each case provides the individual items of identification information of the first cutting tool (20) so they are detectable by the first sensor unit (72, 75).

9. The cutting machine (1) according to any one of the preceding claims,
**characterized in that**
the first sensor unit (72, 75) is designed to mechanically contact the cutting tool to read out the items of identification information, in particular to establish an electrical contact with a storage unit of the cutting tool or to scan a raised identification code applied to a surface of the cutting tool, wherein the identification code in each case provides the individual items of identification information of the first cutting tool (20) so they are detectable by the first sensor unit (72, 75).

10. The cutting machine (1) according to any one of the preceding claims,
**characterized in that**
- the cutting machine (1) comprises a second sensor unit (73, 73'), which is designed to detect individual items of identification information of the cutter (30) and to provide detected items of identification information to the processing unit (15), in particular wherein the second sensor unit (73, 73') is an optical sensor unit, which is designed to detect an optically detectable identification code (63) on the cutter (30), wherein the identification code provides the individual items of identification information of the cutter (30) so they are detectable by the second sensor unit (73, 73'); and
- the processing unit (15) is designed to
- recognize the cutter (30) based on the items of identification information,
- detect operating data of the cutter (30) and store these data in the database, wherein the operating data at least comprise an operating time of the cutter,
- link the operating data of the first cutting tool (20) and operating data of the cutter (30) to one another in the database,
- carry out operational monitoring of the cutter (30) based on the operating data, and/or
- also based on operating data of a plurality of cutters (30), select which of the cutting tools (20, 20', 20", 20‴) provided in a tool changing unit (50) of the cutting machine (1) is inserted into the receptacle device (13).

11. The cutting machine (1) according to any one of the preceding claims,
**characterized in that**
- the cutting machine (1) comprises a setup station sensor unit, in particular designed as an area scan camera, which is designed to detect individual items of identification information of the first cutting tool (20) and the cutter (30) and to provide detected items of identification information to the processing unit (15), and
- the processing unit (15) is designed to recognize the first cutting tool (20) and the cutter (30) based on the items of identification information.

12. The cutting machine (1) according to claim 11,
**characterized in that**
- the setup station sensor unit is arranged on a setup station associated with the cutting machine (1), in particular a control panel of the cutting machine (1), in such a way that the first cutting tool (20) and the cutter (30) can be manually moved toward the setup station sensor unit by a user of the cutting machine (1) in such a way that an identification code of the first cutting tool (20) and/or the cutter (30), which provides the individual items of identification information so they are detectable by the setup station sensor unit, is detectable by the sensor station sensor unit;
- the processing unit (15) is designed to link a cutting tool (20) and a cutter (30) to one another in the database, the individual items of identification information of which were detected successively by the setup station sensor unit; and/or
- the setup station sensor unit is designed to detect individual items of identification information of a sliding block (40), which is designed to be connected to the first cutting tool (20), wherein the processing unit (15) is designed to recognize the sliding block (40) based on the items of identification information and to link it in the database to the first cutting tool (20) and the cutter (30).

13. The cutting machine (1) according to any one of the preceding claims,
**characterized by**
a blade sensor (80), in particular designed as a line scan sensor, for detecting a blade shape of a cutter (30) inserted into the first cutting tool (20),

14. The cutting machine (1) according to claim 13,
**characterized in that**
- items of information about a plurality of cutter types are stored in the processing unit (15) and comprise items of information about a blade shape of the respective cutter type, and
- the processing unit is designed to ascertain a cutter type of the cutter (30) inserted into the first cutting tool (20) on the basis of the blade shape detected by the blade sensor (80).

15. A use of a cutting tool (20) in a cutting machine (1) according to any one of the preceding claims, wherein the cutting tool (20) is designed as replaceably insertable into a receptacle device (13) of the cutting machine (1) and comprises a cutter holder (23) for accommodating a holding section (32) of a cutting machine cutter (30),
wherein the cutting tool (20) comprises a code element, which provides individual identification data of the cutting tool (20) so they are detectable by a first sensor unit (72, 75) of the cutting machine (1), wherein the individual identification data are designed to enable an individual identification of the cutting tool (20).

## Revendications

1. Machine à découper (1) comprenant
- une surface de travail (10) conçue pour recevoir au moins un objet à découper et
- un groupe de travail (12) disposé de façon mobile au-dessus de la surface de travail (10) et qui comporte un dispositif de logement (13) pour recevoir un premier outil de coupe (20) interchangeable, qui comporte une fixation de couteau (23) pour recevoir une partie de maintien (32) d'un couteau de machine à découper (30),
la machine à découper comportant une unité de calcul (15) ou pouvant être connectée à une unité de calcul (15), laquelle unité de calcul (15) comporte un processeur avec une capacité de calcul et des algorithmes pour la commande de la machine à découper (1) et une capacité de mémoire pour fournir une base de données,
**caractérisée en ce qu'**elle comporte
- une première unité de capteur (72, 75) conçue pour détecter des informations d'identification individuelles du premier outil de coupe (20) et pour fournir des informations d'identification acquises à l'unité de calcul (15) et
- une unité de changeur d'outil (50) pour l'insertion automatique d'un outil de coupe (20, 20', 20", 20"') dans le dispositif de logement (13), l'unité de capteur (75) étant montée sur l'unité de changeur d'outil (50) et conçue pour acquérir les informations d'identification du premier outil de coupe (20) quand le premier outil de coupe (20) se trouve dans l'unité de changeur d'outil (50) ou est inséré dans le dispositif de logement (13),
l'unité de calcul (15) étant conçue pour
- reconnaître le premier outil de coupe (20) sur la base des informations d'identification et
- acquérir des données de fonctionnement du premier outil de coupe (20) et les enregistrer dans la base de données, les données de fonctionnement comprenant au moins une durée de fonctionnement de l'outil de coupe, et
- associer le premier outil de coupe (20) au couteau (30) dans la base de données et,
- sur la base des données de fonctionnement, surveiller le fonctionnement du premier outil de coupe (20),
la surveillance du fonctionnement comprenant une surveillance des durées de fonctionnement et/ou des états des plusieurs outils de coupe (20, 20', 20", 20"') et/ou des couteaux (30) insérés dans les outils de coupe, l'unité de calcul (15) étant conçue pour, sur la base de la surveillance du fonctionnement,
- définir un intervalle d'entretien d'un premier outil de coupe (20) et/ou
- déclencher un entretien d'un premier outil de coupe (20) et/ou
- définir un intervalle de remplacement de plusieurs outils de coupe (20, 20', 20", 20‴), en particulier de deux ou plusieurs outils de coupe identiques, et/ou
- déclencher un remplacement du premier outil de coupe (20) et/ou
- définir un intervalle de remplacement de couteaux (30) et/ou
- déclencher un remplacement d'un couteau (30).

2. Machine à découper (1) selon la revendication 1, **caractérisée en ce que** l'unité de calcul (15) est conçue pour
- enregistrer des informations d'identification de plusieurs outils de coupe (20, 20', 20", 20"') interchangeables dans la base de données,
- acquérir des données de fonctionnement pour chaque outil de coupe parmi les plusieurs outils de coupe (20, 20', 20", 20‴) et les enregistrer dans la base de données et,
- sur la base des données de fonctionnement, surveiller le fonctionnement des plusieurs outils de coupe (20, 20', 20", 20‴).

3. Machine à découper (1) selon la revendication 1 ou 2, **caractérisée en ce qu'**une sélection automatique du premier outil de coupe (20) à insérer dans le dispositif de logement (13) se base sur les informations d'identification acquises du premier outil de coupe (20).

4. Machine à découper (1) selon l'une des revendications précédentes, **caractérisée en ce que** l'unité de changeur d'outil (50)
- est conçue pour remplacer automatiquement un outil de coupe qui se trouve dans le dispositif de logement (13) par un autre outil de coupe (20, 20', 20", 20‴), l'autre outil de coupe étant fourni dans l'unité de changeur d'outil (50), et/ou
- est conçue pour fournir plusieurs outils de coupe différents (20, 20', 20", 20"').

5. Machine à découper (1) selon l'une des revendications précédentes, **caractérisée en ce que** l'unité de changeur d'outil (50) est positionnée sur la machine à découper par rapport à une plage de déplacement du groupe de travail (12) de telle manière que le dispositif de logement (13) puisse être positionné sur l'unité de changeur d'outil (50), en particulier au-dessus de l'unité de changeur d'outil (50), en vue de l'insertion ou du remplacement automatique du premier outil de coupe (20).

6. Machine à découper (1) selon l'une des revendications précédentes, **caractérisée en ce que** l'unité de changeur d'outil (50) comporte plusieurs dispositifs de maintien (51) pour fournir plusieurs outils de coupe (20, 20', 20", 20"'), chacun des dispositifs de maintien (51) comportant au moins un appui (52) conçu pour venir en contact avec un dispositif de transport (25) d'un outil de coupe fourni, l'unité de capteur (75) étant montée sur l'unité de changeur d'outil (50) et conçue pour acquérir des informations d'identification du premier outil de coupe (20) fournies sur le dispositif de transport (25) du premier outil de coupe (20) quand le premier outil de coupe (20) se trouve dans l'unité de changeur d'outil (50).

7. Machine à découper (1) selon l'une des revendications précédentes, **caractérisée en ce que** la première unité de capteur (72, 75) est une unité de capteur optique conçue pour acquérir sur le premier outil de coupe (20) un code d'identification (62) pouvant être acquis par des moyens optiques, en particulier un code DataMatrix, lequel code d'identification fournit les informations d'identification individuelles du premier outil de coupe (20) de façon à permettre leur acquisition par la première unité de capteur (72, 75).

8. Machine à découper (1) selon l'une des revendications précédentes, **caractérisée en ce que** la première unité de capteur (72, 75) comporte un lecteur RFID qui est conçu pour acquérir un code d'identification fourni dans un transpondeur RFID de l'outil de coupe, lequel code d'identification fournit les informations d'identification du premier outil de coupe (20) de façon à permettre leur acquisition par la première unité de capteur (72, 75).

9. Machine à découper (1) selon l'une des revendications précédentes, **caractérisée en ce que** la première unité de capteur (72, 75) est conçue en vue d'une mise en contact mécanique avec l'outil de coupe pour lire les informations d'identification, en particulier pour établir un contact électrique avec une unité de mémoire de l'outil de coupe ou balayer un code d'identification apposé sur une surface de l'outil de coupe, le code d'identification fournissant les informations d'identification individuelles du premier outil de coupe (20) de façon à permettre leur acquisition par la première unité de capteur (72, 75).

10. Machine à découper (1) selon l'une des revendications précédentes, **caractérisée en ce que**
- la machine à découper (1) comporte une deuxième unité de capteur (73, 73') conçue pour acquérir des informations d'identification individuelles du couteau (30) et pour fournir des informations d'identification acquises à l'unité de calcul (15), la deuxième unité de capteur (73, 73') étant en particulier une unité de capteur optique conçue pour acquérir un code d'identification (63) du couteau (30) qui peut être acquis par des moyens optiques, le code d'identification fournissant les informations d'identification individuelles du couteau (30) de façon à permettre leur acquisition par la deuxième unité de capteur (73, 73') et
- l'unité de calcul (15) est conçue pour
- reconnaître le couteau (30) sur la base des informations d'identification,
- acquérir des données de fonctionnement du couteau (30) et les enregistrer dans la base de données, les données de fonctionnement incluant au moins une durée de fonctionnement du couteau,
- associer entre elles les données de fonctionnement du premier outil de coupe (20) et les données de fonctionnement du couteau (30) dans la base de données,
- sur la base des données de fonctionnement, surveiller le fonctionnement du couteau (30) et/ou
- sur la base également de données de fonctionnement, sélectionner lequel des plusieurs couteaux (30) des outils de coupe (20, 20', 20", 20‴) fournis dans une unité de changeur d'outil (50) de la machine à découper (1) est inséré dans le dispositif de logement (13).

11. Machine à découper (1) selon l'une des revendications précédentes, **caractérisée en ce que**
- la machine à découper (1) comporte une unité de capteur de poste d'équipement, en particulier conformée comme une caméra matricielle, qui est conçue pour acquérir des informations d'identification individuelles du premier outil de coupe (20) et du couteau (30) et pour fournir des informations d'identification acquises à l'unité de calcul (15), et
- l'unité de calcul (15) est conçue pour reconnaître le premier outil de coupe (20) et le couteau (30) sur la base des informations d'identification.

12. Machine à découper (1) selon la revendication 11, **caractérisée en ce que**
- l'unité de capteur de poste d'équipement est disposée à un poste d'équipement associé à la machine à découper (1), en particulier un pupitre de commande de la machine à découper (1), de telle manière que le premier outil de coupe (20) et le couteau (30) puissent être soulevés manuellement vers l'unité de capteur de poste d'équipement par un opérateur de la machine à découper (1) de telle manière qu'un code d'identification du premier outil de coupe (20) ou du couteau (30) qui donne les informations d'identification individuelles d'une manière permettant leur acquisition par l'unité de capteur de poste d'équipement puisse être acquis par l'unité de capteur de poste d'équipement ;
- l'unité de calcul (15) est conçue pour associer entre eux dans la base de données un outil de coupe (20) et un couteau (30) dont les informations d'identification individuelles ont été acquises successivement par l'unité de capteur de poste d'équipement et/ou
- l'unité de capteur de poste d'équipement est conçue pour acquérir des informations d'identification individuelles d'un patin (40) conçu pour être relié au premier outil de coupe (20), l'unité de calcul (15) étant conçue pour reconnaître le patin (40) sur la base des informations d'identification et l'associer avec le premier outil de coupe (20) et le couteau (30) dans la base de données.

13. Machine à découper (1) selon l'une des revendications précédentes, **caractérisée en ce qu'**elle comporte un capteur de lame (80), conçu en particulier comme un capteur linéaire, pour détecter une forme de lame de chaque couteau (30) inséré dans le premier outil de coupe (20).

14. Machine à découper (1) selon la revendication 13, **caractérisée en ce que**
- des informations sur plusieurs types de couteaux sont enregistrées dans l'unité de calcul (15) et incluent des informations sur une forme de lame de chaque type de couteau et
- l'unité de calcul est conçue pour déterminer, à l'aide de la forme de lame acquise à l'aide du capteur de lame (80), un type de couteau du couteau (30) inséré dans le premier outil de coupe (20).

15. Utilisation d'un outil de coupe (20) dans une machine à découper (1) selon l'une des revendications précédentes, dans laquelle l'outil de coupe (20) est conçu pour pouvoir être inséré de façon interchangeable dans un dispositif de logement (13) de la machine de coupe (1) et comporte une fixation de couteau (23) destinée à recevoir une partie de maintien (32) d'un couteau de machine à découper (30), dans laquelle l'outil de coupe (20) comporte un élément de code qui fournit des données d'identification individuelles de l'outil de coupe (20) d'une façon permettant leur acquisition par une première unité de capteur (72, 75) de la machine à découper (1), les données d'identification individuelles étant conçues pour permettre une identification individuelle de l'outil de coupe (20).
